# EUROPÄISCHE PATENTSCHRIFT

(11) **EP 0 706 886 B1**
(45) Veröffentlichungstag und Bekanntmachung des Hinweises auf die Patenterteilung: **16.06.1999**
(21) Anmeldenummer: 95115685.0
(22) Anmeldetag: 05.10.1995
(51) Int. Cl.: B41F 33/00

(54) **Vorrichtung zur Messung einer Durchbiegung eines Zylinders einer Rotationsdruckmaschine**
Device for measuring deflection of a cylinder of a rotary printing machine
Dispositif pour mesurer la flexion d'un cylindre d'une rotative d'impression

(30) Priorität: 13.10.1994 DE 4436628
(43) Veröffentlichungstag der Anmeldung: 17.04.1996
(73) Patentinhaber: Koenig & Bauer Aktiengesellschaft, 97080 Würzburg (DE)
(72) Erfinder: Schaede, Johannes Georg, D-97074 Würzburg (DE)

(56) Entgegenhaltungen:
- EP-A- 0 540 919
- DE-A- 2 211 598
- DE-C- 3 008 230
- DE-C- 3 432 701
- DE-C- 3 520 344
- DE-C- 4 313 862

## Beschreibung

Die Erfindung betrifft eine Vorrichtung zur Messung einer Durchbiegung eines Zylinders einer Rotationsdruckmaschine gemäß dem Oberbegriff des Anspruches 1.

Aus der DE 35 20 344 C2 ist eine Einrichtung zur Messung des Anpreßdruckes zwischen Schmitzringen eines Zylinders bekannt. Hierbei sind Meßwertgeber auf den Zylinderzapfen vorgesehen, deren Signale von dem rotierenden Zylinder berührungslos zu einem feststehenden Teil einer Auswerteelektronik übertragen werden.

Nachteilig an dieser Einrichtung ist, daß die Anordnung der Meßwertgeber an den Zylinderzapfen der Forderung nach hoher Steifigkeit der Zylinderzapfen widerspricht. Bei hoher Steifigkeit der Zylinderzapfen wird nur eine geringe Biegung der Zapfen auftreten, die meßtechnisch schwer zu erfassen ist. Außerdem ist eine aufwendig Übertragung der Meßsignale vom rotierenden Zylinder auf den feststehenden Teil der Auswerteelektronik notwendig.

Die DE 30 08 230 C2 beschreibt eine Einrichtung zur Druckpressungsregelung zwischen Zylindern an Druckmaschinen mit einem piezoelektrischen Aufnehmer, der in einem Zylinderlager angeordnet ist.
Diese Einrichtung hat den Nachteil, daß einerseits die Zylinderlagerung eine hohe radiale Steifigkeit aufweisen sollen, aber andererseits zur Meßwerterfassung radiale Bewegungen notwendig sind.

Der Erfindung liegt die Aufgabe zugrunde, eine Vorrichtung zur Messung einer Durchbiegung eines Zylinders einer Rotationsdruckmaschine mittels eines Luftaufnehmers zu schaffen, die in eine auf den Zylinder wirkende Seitenregisterverstelleinrichtung integriert ist und bei der trotz hoher radialer Steifigkeit von Zylinderzapfen wie auch dessen Lagerung im Bereich der Meßwertaufnehmer große Durchbiegung erreicht werden, so daß ausreichend große Signale zu einer wenig empfindlichen Auswertung zu Verfügung gestellt werden können.

Diese Aufgabe wird erfindungsgemäß durch eine Vorrichtung mit den Merkmalen des kennzeichnenden Teils des Anspruches 1 gelöst.

In vorteilhafter Weise wird durch die übertragung eines durch die Durchbiegung des Zylinders auftretenden winkligen Versatzes der Zylinderzapfen auf einen Biegestab eine im Vergleich zu dem Zylinderzapfen wesentlich größere Durchbiegung erreicht. Diese vergleichsweise große Durchbiegung, auch bei geringen auf den Zylinder wirkenden Kräften, kann meßtechnisch einfach erfaßt werden. Da der Biegestab nicht rotiert sind keine aufwendige übertragungselemente zur Meßdatenübertragung notwendig. Durch die torsionskräftefreie Anordnung des Biegestabes und einen Querschnitt des Biegestabes, der eine bevorzugte Biegerichtung hervorruft, ist eine fehlerarme Meßdatenerfassung möglich. Im besonders vorteilhafter Weise ist die Vorrichtung in einer Seitenregisterverstelleinrichtung integriert und benötigt somit keinen zusätzlichen Bauraum.

Die erfindungsgemäße Vorrichtung ist in der Zeichnung näher dargestellt und wird im folgenden näher beschrieben.

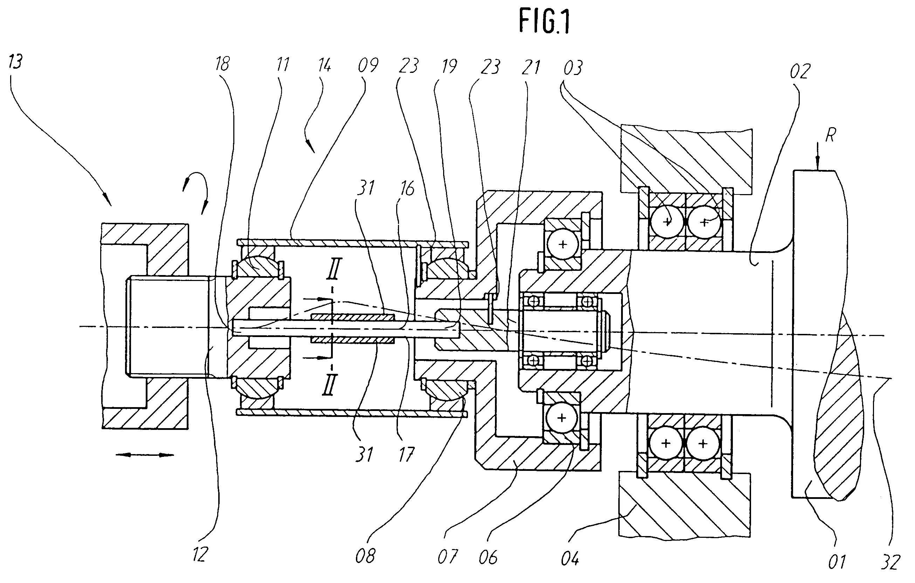

Es zeigen
- Fig. 1: einen schematischen Schnitt eines Ausführungsbeispiels einer erfindungsgemäßen Vorrichtung,
- Fig. 2: einen schematischen Schnitt durch einen Biegestab mit applizierten Dehnungsmeßstreifen der erfindungsgemäßen Vorrichtung.

Ein Zylinder 1 einer Rotationsdruckmaschine ist beidseitig mit Zylinderzapfen 2 versehen. Mittels Lagerungen 3 sind diese Zylinderzapfen 2 drehbar und axial verschiebbar in Gestellen 4 gelagert.
Auf diesem rotierenden Zylinderzapfen 2 ist mittels einer Lagerung 6 und einem Adapterstück 7 ein erstes, nicht rotierendes Gelenk 8 gelagert. Dieses Gelenk 8 ist über eine starre Hülse 9 mit einem zweiten Gelenk 11 verbunden, wobei dieses zweite Gelenk 11 mit einer drehfesten Aufnahme, z. B. Achszapfen 12, einer an sich bekannten, axial verschiebbaren Seitenregisterverstelleinrichtung 13, die ansonsten gestellfest ist, zusammenwirkt.
Die beiden Gelenke 8, 11 und die Hülse 9 bilden eine Doppelgelenkkupplung 14, die zwar in axialer Richtung gesehen starr ist, d. h. Axialkräfte überträgt, aber einen Winkelersatz nicht paralleler Achsen und evtl. zueinander versetzter Achsen ausgleicht und miteinander verbindet. Diese Doppelgelenkkupplung 14 gleicht Winkelfehler zur Fluchtungsachse 16 von Achszapfen 12 der Seitenregisterverstelleinrichtung 13 und Zylinderzapfen 2 aus und überträgt Kräfte in axialer Richtung. Die Fixierung des Zylinders 1 an der Seitenregisterverstelleinrichtung 13 erfolgt über die Doppelgelenkkupplung 14. Im vorliegenden Beispiel sind die schwenkbaren, druck- und zugsteifen Gelenke 8, 11 als Einstell-Lager ausgeführt. Es können aber ebenso Pendelwälzlager oder Kugelgelenkkupplungen verwendet werden.

Ein Biegestab 17 ist mit seinen ersten Ende 18 im Achszapfen 12 der Seitenregisterverstellenrichtung 13 und mit seinen zweiten Ende 19 mittels eines Zwischenstückes 21 im Zylinderzapfen 2 biegesteif angeordnet. Das Zwischenstück 21 ist im Zylinderzapfen 2 gelagert und weist zu dem Adapterstück 7 und der Doppelgelenkkupplung 14 eine Verdrehsicherung 23 auf. Somit können auf den Biegestab 17 nur Biegemomente und keine Torsionsmomente übertragen werden. Anstelle des hier beschriebenen Ausführungsbeispieles ist es natürlich auch möglich die Doppelgelenkkupplung 14 drehfest mit dem Zylinderzapfen 2 zu verbinden und diese auf den Achszapfen 12 der Seitenregisterverstelleinrichtung 13 drehbar zu lagern.

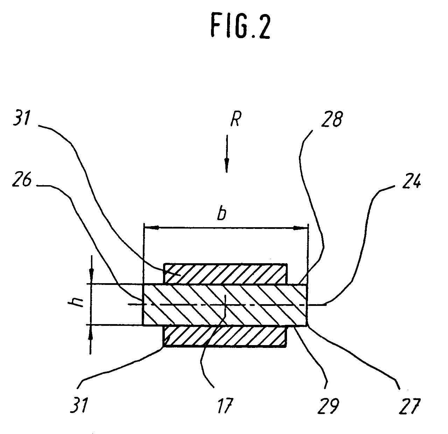

Der Biegestab 17 kann wie im vorliegenden Beispiel (Fig. 2) in seinem Querschnitt so ausgebildet sein, daß das in der Biegeebene 24, d. h. annähernd senkrecht zu einer Resultierenden R der einwirkenden Kräfte, liegende axiale Flächenmoment, um mindestens einen Faktor 10 kleiner ist, als das hierzu annähernd senkrecht, d. h. parallel zu der Resultierenden R liegende axiale Flächenmoment. Somit weist der Biegestab 17 eine bevorzugte Biegerichtung auf. Der Querschnitt des Biegestabes 17 kann z. B. rechteckig ausgebildet sein und aus zwei Seitenflächen 26, 27 der Höhe h und zwei Grundflächen 28, 29, der Breite b bestehen. Auf die Grundflächen 28, 29, die sich annähernd senkrecht zur Resultierenden R und damit parallel zur Biegeebene 24 erstrecken, sind Meßelemente, z. B. Dehnungsmeßstreifen 31, zur Verformungsmessung des Biegestabes 17 appliziert.

Wird nun der Zylinder 1 mit zusätzlich zu einer Gewichtskraft wirkenden Kräften belastet, biegt sich der Zylinder aufgrund der sich ergebenden Resultierenden R und den wirkenden axialen Trägheitsmomenten des Zylinders 1 und der Zylinderzapfen 2. Diese Resultierende R wird von der Lagerung der Zylinderzapfen 2 abgestützt, und die Zylinderzapfen 2 werden winklig entsprechend einer sich ergebenden Biegelinie 32 des Zylinders 1 verlagert. Demzufolge wird auch das mit dem über das Zwischenstück 21 biegesteif verbundene Ende 19 des Biegestabes 17 winklig verlagert, während das andere Ende 18 des Biegestabes 17 ortsfest bleibt. Der Biegestab 17 wird also mit einer Biegekraft und einem Biegemoment beaufschlagt, was zu einer Durchbiegung des Biegestabes 17 führt. Diese Durchbiegung wird von den Dehnungsmeßstreifen 31 und über eine an sich bekannte Elektronik ermittelt. Diese gemessenen Werte sind ein Maß für die auf den Zylinder wirkenden Kräften.

### Teileliste

- 1: Zylinder
- 2: Zylinderzapfen
- 3: Lagerung
- 4: Gestell
- 5: -
- 6: Lagerung
- 7: Adapterstück
- 8: Gelenk (14)
- 9: Hülse (14)
- 10: -
- 11: Gelenk (14)
- 12: Achszapfen
- 13: Seitenregisterverstelleinrichtung
- 14: Doppelgelenkkupplung
- 15: -
- 16: Fluchtungsachse
- 17: Biegestab
- 18: Ende (17)
- 19: Ende (17)
- 20: -
- 21: Zwischenstuck
- 22: Lagerung (21)
- 23: Verdrehsicherung
- 24: Eiegeebene
- 25: -
- 26: Seitenfläche (17)
- 27: Seitenfläche (17)
- 28: Grundfläche (17)
- 29: Grundfläche (17)
- 30: -
- 31: Dehnungsmeßstreifen
- 32: Biegelinie
- R: Resultierende der einwirkenden Kräfte
- b: Breite
- h: Höhe

## Patentansprüche

1. Vorrichtung zur Messung einer Durchbiegung eines mit Zylinderzapfen (2) versehenen Zylinders (1) einer Rotationsdruckmaschine mittels eine Auslenkung des Zylinderzapfens (2) erfassender Meßelemente (31), dadurch gekennzeichnet, daß ein Zylinderzapfen (2) mittels einer Doppelgelenkkupplung (14) mit einer axial verschiebbaren, ansonsten gestellfesten Seitenregisterverstelleinrichtung (13) drehbar verbunden ist, daß die Doppelgelenkkupplung (14) im wesentlichen aus zwei schwenkbaren, druck- und zugsteifen Gelenken (8, 11), die über eine starre Hülse (9) verbunden sind, besteht, daß ein mit den Meßelementen (31) versehener Biegestab (17) an dem Zylinderzapfen (2) drehbar und der Seitenregisterverstelleinrichtung (13) zusammenwirkend angeordnet ist .

2. Vorrichtung nach Anspruch 1, dadurch gekennzeichnet, daß die Gelenke (8, 11) der Doppelgelenkkupplung (14) als Einstellager ausgebildet sind.

3. Vorrichtung nach Anspruch 1, dadurch gekennzeichnet, daß die Gelenke (8, 11) der Doppelgelenkkupplung (14) als Pendelwälzlager ausgebildet sind.

4. Vorrichtung nach Anspruch 1, dadurch gekennzeichnet, daß ein Ende (19) des Biegestabes (17) mittels eines Zwischenstückes (21) im Zylinderzapfen (2) drehbar gelagert ist und daß dieses Zwischenstück (21) zu der Doppelgelenkkupplung (14) eine Verdrehsicheung (23) aufweist.

5. Vorrichtung nach Anspruch 1, dadurch gekennzeichnet, daß ein Gelenk (8) der Doppelgelenkkupplung (14) mittels eines Adapterstückes (7) drehbar mit dem Zylinderzapfen (2) verbunden ist

6. Vorrichtung nach Anspruch 1, dadurch gekennzeichnet, daß der Biegestab (17) innerhalb der Doppelgelenkkupplung (14) angeordnet ist.

## Claims

1. Device for measuring a deflection of a cylinder (1) of a rotary printing machine, the said cylinder being provided with cylinder journals (2), by means of measuring elements (31) detecting a deviation of the cylinder journal (2), characterized in that a cylinder journal (2) is connected rotatably by means of a double-joint coupling (14) to an axially displaceable side-register adjusting means (13) which is otherwise fixed relative to the stand, in that the double-joint coupling (14) consists essentially of two pivotable pressure-resistant and tension-resistant joints (8, 11) which are connected via a rigid sleeve (9), in that a flexion bar (17) provided with the measuring elements (31) is arranged on the cylinder journal (2) rotatably and so as to cooperate [lacuna] the side-register adjusting means (13).

2. Device according to Claim 1, characterized in that the joints (8, 11) of the double-joint coupling (14) are designed as adjusting bearings.

3. Device according to Claim 1, characterized in that the joints (8, 11) of the double-joint coupling (14) are designed as pendulum rolling bearings.

4. Device according to Claim 1, characterized in that one end (19) of the flexion bar (17) is mounted rotatably in the cylinder journal (2) by means of an intermediate piece (21), and in that this intermediate piece (21) has a rotation prevention means (23) relative to the double-joint coupling (14).

5. Device according to Claim 1, characterized in that one joint (8) of the double-joint coupling (14) is connected rotatably to the cylinder journal (2) by means of an adapter piece (7).

6. Device according to Claim 1, characterized in that the flexion bar (17) is arranged within the double-joint coupling (14).

## Revendications

1. Dispositif de mesure de la flexion d'un cylindre (1) de rotative d'imprimerie muni d'un tourillon de cylindre (2) a l'aide d'éléments de mesure (31) captant une déviation dudit tourillon de cylindre (2), caractérisé en ce qu'un tourillon de cylindre (2) est relié de manière tournante, par un moyen d'accouplement à double articulation (14), à un dispositif de réglage de repérage latéral (13) à translation axiale et par ailleurs solidaire du bâti, en ce que le moyen d'accouplement à double articulation (14) est constitué pour l'essentiel de deux articulations pivotantes (8, 11) rigides en pression et en traction et reliées par un fourreau rigide (9), et en ce qu'une barre de flexion (17) pourvue d'éléments de mesure (31) est disposée sur le tourillon de cylindre (2) de manière à pouvoir tourner et à coopérer avec le dispositif de réglage de repérage latéral (13).

2. Dispositif selon la revendication 1, caractérisé en ce que les articulations (8, 11) du moyen d'accouplement à double articulation (14) sont conçues sous la forme de paliers de réglage.

3. Dispositif selon la revendication 1, caractérisé en ce que les articulations (8, 11) du moyen d'accouplement à double articulation (14) sont conçues sous la forme de roulements oscillants.

4. Dispositif selon la revendication 1, caractérisé en ce qu'une extrémité (19) de la barre de flexion (17) est montée pivotante dans le tourillon de cylindre (2) à l'aide d'une pièce intermédiaire (21), et en ce que cette pièce intermédiaire (21) comporte un moyen de blocage en rotation (23) par rapport au moyen d'accouplement à double articulation (14).

5. Dispositif selon la revendication 1, caractérisé en ce qu'une articulation (8) du moyen d'accouplement à double articulation (14) est reliée de manière tournante au tourillon de cylindre (2) à l'aide d'une pièce d'adaptation (7).

6. Dispositif selon la revendication 1, caractérisé en ce que la barre de flexion (17) est disposée à l'intérieur du moyen d'accouplement à double articulation (14).
